(19) Europäisches Patentamt
European Patent Office
Office européen des brevets

(11) Numéro de publication: **0 141 685**
**A1**

# (12) DEMANDE DE BREVET EUROPEEN

(21) Numéro de dépôt: **84401590.9**

(22) Date de dépôt: **30.07.84**

(51) Int. Cl.⁴: **C 08 L 83/04**, C 08 K 5/40, A 01 N 47/26

(30) Priorité: **12.08.83 FR 8313255**

(43) Date de publication de la demande: **15.05.85 Bulletin 85/20**

(84) Etats contractants désignés: **AT BE CH DE FR GB IT LI LU NL SE**

(71) Demandeur: **RHONE-POULENC SPECIALITES CHIMIQUES, "Les Miroirs" 18, Avenue d'Alsace, F-92400 Courbevoie (FR)**

(72) Inventeur: **Favre, Georges, "Les Roses" Lotissement Beauregard, F-69320 Feyzin (FR)**
Inventeur: **Perrin, Patrice, 39, rue Boileau, F-69006 Lyon (FR)**

(74) Mandataire: **Seugnet, Jean Louis et al, RHONE-POULENC RECHERCHES Service Brevets Chimie et Polymères 25, quai Paul Doumer, F-92408 Courbevoie (FR)**

## (54) Compositions organopolysiloxaniques monocomposantes résistant aux microorganismes.

(57) La composition organopolysiloxanique monocomposante résistant aux microorganisms selon l'invention est stable au stockage en l'absence d'eau, durcissant en élastomère dès la température ambiante en présence d'eau et est caractérisée en ce qu'elle comporte de 0,01 à 1,2 % en poids par rapport au poids total de la composition d'un agent fongicide choisi parmi au moins un disulfure de tétraalkylthiurame de formule:

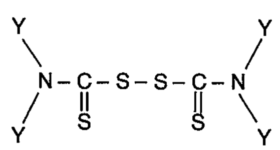

dans laquelle Y représente un radical alkyle présentant de 1 à 4 atomes de carbone.

Utilisation de ces compositions notamment comme jointement dans l'industrie du bâtiment.

EP 0 141 685 A1

# Compositions organopolysiloxaniques monocomposantes résistant aux microorganismes

La présente invention a pour objet des compositions organopolysiloxaniques monocomposantes, stables au stockage en l'absence d'humidité, durcissant en élastomères dès la température ambiante en présence d'humidité et résistant aux microorganismes grâce à l'incorporation d'un agent fongicide particulièrement actif.

Les compositions organopolysiloxaniques monocomposantes sont utilisées depuis plus de 20 ans comme matériaux d'étanchéité dans tous les domaines d'applications qui nécessitent des joints élastiques, résistant efficacement au vieillissement, aux intempéries, à la chaleur et au froid et à l'action de produits corrosifs. En particulier, elles assurent dans le domaine du sanitaire le jointoiement des interstices existant dans les salles d'eau et les cuisines, autour des baignoires, douches, éviers, carrelages... Toutefois, ces joints perdent très rapidement leur aspect neuf, attrayant, du fait de la prolifération à leur surface de moisissures qui forment des plages et traînées de teinte foncée, peu esthétiques.

Pour combattre le développement de ces microorganismes, on a introduit dans les compositions organopolysiloxaniques des agents fongicides. Cependant, tous les agents fongicides connus, utilisés ordinairement dans le domaine agricole ou dans le domaine des peintures et revêtements, ne sont pas valables ; en effet, leur présence peut exercer une action défavorable, par exemple, sur la stabilité des compositions, ou sur l'adhérence à divers supports des élastomères issus de ces compositions (demande Européenne publiée 34 877).

Ainsi un choix doit être fait qui essaye de concilier une efficacité antifongique élevée et la conservation de bonnes caractéristiques physiques. C'est pour ces raisons que de nombreux documents ont été publiés et continuent d'être publiés, traitant de l'incorporation de composés antifongiques au sein de compositions et élastomères organopolysiloxaniques.

Dans le groupe des composés antifongiques décrits, peuvent être cités, à titre indicatif :

- le (thiazolyl-4)2 benzimidazole (demande française publiée 2.421.195)

- des iodoalcoylphénylsulfones (demande européenne précitée 34 877)

- des sels phénylmercuriques d'acides carboxyliques (brevet français 1.462.754)

- la tétrachloro-2,3,5,6 méthylsulfonyl-4 pyridine (demande japonaise publiée 76.106158)

- des oxydes, et autres dérivés, de triorganoétains (demandes japonaises publiées 82.096 044 et 82.133 150)

La présente invention a permis de mettre en évidence que, parmi les agents fongicides connus, les disulfures de tétraalkylthiurame possèdent, dispersés dans des compositions organopolysiloxaniques monocomposantes, une action antifongique élevée ; de plus, ils n'altèrent pas les caractéristiques physiques de ces compositions et des élastomères en découlant.

La présente invention a donc pour objet des compositions organopolysiloxaniques renfermant au moins un disulfure de tétraalkylthiurame. Plus précisément, elle concerne une composition organopolysiloxanique monocomposante, stable au stockage en l'absence d'eau, durcissant en élastomère dès la température ambiante en présence d'eau, formée par mélange des constituants ci-après :

A) 100 parties d'un polymère α-ω dihydroxydiorganopolysiloxanique, de viscosité 700 à 1 000 000 mPa.s à 25°C, formé d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogène, des groupes cyano ;

B) 2 à 25 parties d'un organosilane répondant à la formule $R_aSi(Z)_{4-a}$ dans laquelle le symbole R a la signification donnée sous (A), les symboles Z, identiques ou différents représentent des radicaux hydrolysables choisis dans le groupe constitué de ceux de formules :

$-OR^1-$, $-OCOR^2-$, $-ON{=}C(R^3)_2$, 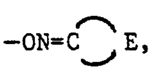,

$-N(R^4)COR^4$, 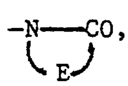, $-NHR^4$ dans lesquelles :

- le symbole $R^1$ représente un radical alcoyle ayant de 1 à 4 atomes de carbone, un radical β-méthoxyéthyle de formule : $-CH_2CH_2OCH_3$

- le symbole $R^2$ représente un radical hydrocarboné, exempt d'insaturations aliphatiques, ayant de 1 à 15 atomes de carbone

- les symboles $R^3$, identiques ou différents, représentent des radicaux alcoyles, ayant de 1 à 5 atomes de carbone

- les symboles $R^4$, identiques ou différents, représentent des radicaux hydrocarbonés exempts d'insaturations aliphatiques, ayant de 1 à 10 atomes de carbone

- le symbole E représente un radical alcoylène ayant de 3 à 7 atomes de carbone

- le symbole a représente zéro ou un

C) 5 à 200 parties de charges minérales

D) 0,0003 à 15 parties d'un catalyseur de durcissement choisi parmi les chelates de fer et de titane, les sels d'étain, de fer, de plomb d'acides carboxyliques, les sels d'organoétains d'acides carboxyliques, les titanates et zirconates d'alcoyles, les produits de réaction des sels d'organoétains d'acides carboxyliques avec les titanates d'alcoyles,

la composition étant caractérisée en ce qu'elle comporte de 0,01 à 1,2 % en poids par rapport au poids total de la composition, d'un agent fongicide (E) choisi parmi au moins un disulfure de tétraalkylthiurame répondant à la formule (I) :

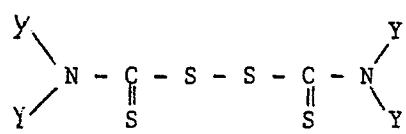

dans laquelle les radicaux Y, identiques ou différents, représentent un radical alkyle présentant de 1 à 4 atomes de carbone.

Les polymères α-ω di(hydroxy)diorganopolysiloxaniques (A) de viscosité 700 à 1 000 000 mPa.s à 25°C, de préférence 1 000 à 700 000 mPa.s à 25°C, sont des polymères linéaires, constitués essentiellement de motifs diorganosiloxy de formule précitée $R_2SiO$, et bloqués à chaque extrémité de leur chaine par un groupe hydroxyle ; toutefois, la présence de motifs monoorganosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 8 atomes de C, substitués ou non par des atomes d'halogènes ou des groupes cyano, représentés par les symboles R, englobent :

- les radicaux alcoyles et halogénoalcoyles ayant de 1 à 8 atomes de carbone tels que les radicaux méthyle, éthyle, n-propyle, isopropyle, n-butyle, n-pentyle, n-hexyle, éthyl-2 hexyle, n-octyle, trifluoro-3,3,3 propyle, trifluoro-4,4,4 butyle, pentafluoro-4,4,4,3,3 butyle.

- les radicaux cycloalcoyles et halogénocycloalcoyles ayant de 4 à 8 atomes de carbone tels que les radicaux cyclopentyle, cyclohexyle, méthylcyclohexyle, difluoro-2,3 cyclobutyle, difluoro-3,4 méthyl-5 cycloheptyle.

- les radicaux alcenyles ayant de 2 à 4 atomes de carbone tels que les radicaux vinyle, allyle, butène-2 yle

- les radicaux aryles et halogénoaryles ayant de 6 à 8 atomes de carbone tels que les radicaux phényle, tolyle, xyxlyle, chlorophényle, dichlorophényle, trichlorophényle.

- les radicaux cyanoalcoyles dont les chainons alcoyles ont de 2 à 3 atomes de carbone tels que les radicaux β-cyanoéthyle et γ-cyanopropyle.

A titre d'exemples concrets de motifs représentés par la formule $R_2SiO$ on peut citer ceux de formules :

$(CH_3)_2SiO$ $CH_3(CH_2{=}CH)SiO$ $CH_3(C_6H_5)SiO$

$(C_6H_5)_2SiO$ $CF_3CH_2CH_2(CH_3)SiO$ $NC{-}CH_2CH_2(CH_3)SiO$

$NC{-}CH(CH_3)CH_2(CH_2{=}CH)SiO$ $NC{-}CH_2CH_2CH_2(C_6H_5)SiO$

Il doit être compris, selon une variante de l'invention, que l'on peut utiliser comme polymères (A) un mélange constitué de polymères α-ω- di(hydroxy)diorganopolysiloxaniques qui diffèrent entre eux par le poids moléculaire et/ou la nature des groupements liés aux atomes de silicium.

Ces polymères α-ω- di(hydroxy)diorganopolysiloxaniques (A) sont commercialisés ; en outre, ils peuvent être aisément fabriqués. L'une des techniques de fabrication les plus courantes consiste, dans une première phase, à polymériser des diorganocyclopolysiloxanes à l'aide de quantités catalytiques d'agents alcalins ou acides puis à traiter les polymérisats avec des quantités calculées d'eau (brevets français 1 134 005, 1 198 749, 1 226 745) ; cet apport d'eau, qui est d'autant plus élevé que les polymères à préparer ont une viscosité plus faible, peut être remplacé en totalité ou en partie par des huiles α-ω-di(hydroxy)diorganopolysiloxaniques de faible viscosité, par exemple allant de 5 à 200 mPa.s à 25°C, ayant un taux élevé de radicaux hydroxyles, par exemple de 3 à 14 %.

Les agents réticulants (B) sont employés à raison de 2 à 25 parties, de préférence de 3 à 20 parties, pour 100 parties des polymères α-ω-di(hydroxy)diorganopolysiloxaniques (A).

Ils répondent à la formule précitée $R_aSi(Z)_{4-a}$ dans laquelle le symbole R a la signification des symboles R des motifs précités $R_2SiO$, le symbole Z représente, comme déjà indiqué, des radicaux hydrolysables choisis parmi ceux de formules :

$OR^1$ $-OCOR^2$ $-ON{=}C(R^3)_2$ 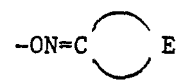

$N(R^4)COR^4$ 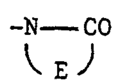 $-NHR^4$

et le symbole a représente zéro ou un.

Des précisions ont été déjà fournies sur la nature des radicaux représentés par le symbole R ; des précisions sont maintenant données sur la nature des radicaux représentés par les autres symboles. Ainsi le symbole $R^1$ représente un radical β -méthoxyéthyle, un radical alcoyle ayant de 1 à 4 atomes de carbone tel que le radical méthyle, éthyle, n-propyle, isopropyle, n-butyle, t-butyle.

Le symbole $R^2$ représente un radical hydrocarboné exempt d'insaturation aliphatique qui englobe :

- les radicaux alcoyles ayant de 1 à 15 atomes de carbone tels que les radicaux méthyle, éthyle, n-propyle, n-butyle, n-pentyle, éthyl-1 pentyle, n-hexyle, n-octyle, néodécyle, n-décyle, n-dodécyle, n-pentadécyle.

- les radicaux cycloalcoyles ayant de 5 à 6 atomes de carbone nucléaire tels que les radicaux cylopentyle et cyclohexyle;

- les radicaux aryles ayant de 6 à 8 atomes de carbone tels que les radicaux phényle, tolyle, xylyle.

Chaque symbole $R^3$ représente un radical alcoyle ayant de 1 à 5 atomes de carbone tel que le radical méthyle, éthyle, n-propyle, isopropyle, n-butyle, isobutyle, n-pentyle.

Chaque symbole $R^4$ représente un radical hydrocarboné, exempt d'insaturation aliphatique, qui englobe :

- les radicaux alcoyles ayant de 1 à 10 atomes de carbone tels que les radicaux méthyle, éthyle, n-propyle, n-butyle, n-hexyle, éthyl-1 pentyle, n-octyle, n-décyle.

- les radicaux cycloalcoyles ayant de 5 à 8 atomes de carbone tels que les radicaux cyclopentyle, cyclohexyle, méthylcyclohexyle, diméthylcyclohexyle.

- les radicaux aryles ayant de 6 à 8 atomes de carbone tels que les radicaux phényle, tolyle, xylyle.

Le symbole E représente un radical alcoylène, linéaire ou ramifié ayant de 3 à 7 atomes de carbone, qui peut être choisi parmi ceux de formules :

$-(CH_2)_3$ $\quad$ $-(CH_2)_4$ $\quad$ $-(CH_2)_5$ $\quad$ $-CH_2-CH(CH_3)-CH_2-CH_2-$

$-CH_2-CH_2-CH(CH_3)-CH_2-CH_2-$ $\quad$ $-CH_2-CH(C_2H_5)-CH_2CH_2-CH_2-$

Comme déjà mentionné, les symboles Z de la formule $R_aSi(Z)_{4-a}$ peuvent être identiques ou différents. Lorsqu'ils sont identiques,il y a nécessairement, liés à l'atome de silicium, 3 ou 4 radicaux de même nature, par exemple des radicaux de formule $-OR^1$ ou de formule $-OCOR^2$. Lorsqu'ils sont différents, il y a nécessairement, liés à l'atome de silicium, au moins 2 radicaux de nature différente par exemple des radicaux de formules $-OCOR^2$ et $-NHR^4$ ou de formules $-ON=C(R^3)_2$ et $-N(R^4)COR^4$.

Parmi les silanes du dernier type dits silanes mixtes, il faut prendre plus particulièrement en considération, parce que bien connus et faciles à préparer, les silanes de formule $R_aSi(Z')_b(OR^1)_{4-a-b}$ dans laquelle les symboles R, $R^1$ et a ont la signification précédemment indiquée, le symbole Z' a la signification de Z sauf qu'il ne représente pas le radical $OR^1$, le symbole b représente 1,2 ou 3 et la somme a + b est 1,2 ou 3. En outre, lorsque 2 ou 3 radicaux représentés par Z' sont liés à l'atome de silicium (b représente alors 2 ou 3), ces radicaux sont presque toujours de même nature.

Ces silanes mixtes sont plus spécialement décrits dans la première addition 90 695 au brevet français 1 423 477 et dans les brevets français 1 439 025, 1 541 542, 1 541 543 et 2 067 636.

Les silanes dits normaux, de formule $R_aSi(Z)_{4-a}$, dont tous les radicaux représentés par Z sont de même nature, figurent dans de nombreux brevets, et plus spécialement dans les brevets français ci-après :

- (Z = radical $OR^1$) (1.330.625, 2.121.289, (2.121.631, 2.458.572)

- (Z = radical $-OCOR^2$) (1.198.749, 1.220.348 (2.464.288)

- (Z = radical $-ON=C(R^3)_2$ ou 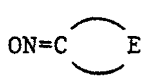 ) (1.314.649, 1.371.250, 2.074.144)

- (Z = radical $-N(R^4)COR^4$ ou 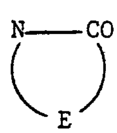 ) (1.423.477, 2.201.326)

- (Z = radical $-NHR^4$) (1.248.826, 1.510.778, (2.201.327)

Dans le groupe de ces brevets, le brevet 2.458.572 décrit des alcoxyorganosilanes nettement définis de formule :

$$R^5_xSi\left[(OCH_2CH_2)_pOCH_3\right]_{4-x}$$

dans laquelle le symbole $R^5$ représente un radical méthyle, vinyle, allyle, méthallyle, phényle, et les symboles p et x représentent zéro ou 1.

Ces alcoxyorganosilanes conduisent, après mélange avec des aminoorganosilanes, des sels d'organoéthains et des α-ω di(hydroxy)diorganopolysiloxanes, à des compositions stables au stockage et qui durcissent en élastomères fortement adhérents à de nombreux matériaux.

Ci-après sont cités, à titre illustratif, des silanes répondant à la formule générale :

$$R_aSi(Z)_{4-a}$$

1) <u>Silanes normaux</u> :

$Z = OR^1$

$Si(OCH_3)_4$ , $CH_3Si(OCH_3)_3$ , $CH_3Si(OCH_2CH_2OCH_3)_3$

$Si(OCH_2CH_2OCH_3)_4$ , $CH_2{=}CHSi(OCH_2CH_2OCH_3)_3$

$C_6H_5Si(OCH_3)_3$ , $C_6H_5Si(OCH_2CH_2OCH_3)_3$

$Z = OCOR^2$

$CH_3Si(OCOCH_3)_3$ , $C_2H_5Si(OCOCH_3)_3$ , $CH_2{=}CHSi(OCOCH_3)_3$

$C_6H_5Si(OCOCH_3)_3$ , $CH_3Si\{OCOCH(C_2H_5)(CH_2)_3{-}CH_3\}_3$

$CF_3CH_2CH_2Si(OCOC_6H_5)_3$ , $CH_3Si(OCOC_6H_5)_3$

$CH_3Si(OCOCH_3)_2OCOCH(C_2H_5)(CH_2)_3CH_3$

$CH_3COOSi\{OCOCH(C_2H_5)_2(CH_2)_3CH_3\}_3$

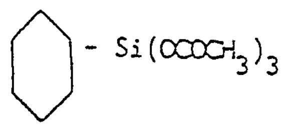 , $CN-CH_2CH_2Si(OCOCH_3)_3$

$Z = -ON{=}C(R^3)_2$ , 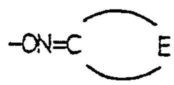

$CH_3Si\{ON{=}C(CH_3)_2\}_3$ ; $CH_3Si\{ON{=}C(CH_3)C_2H_5\}_3$

$CH_2{=}CHSi\{ON{=}C(CH_3)C_2H_5\}_3$ , $C_6H_5Si\{ON{=}C(CH_3)_2\}_3$

$CH_3Si\{ON{=}C(C_2H_5)(CH_2)_3CH_3\}_3$ ,

$CH_3Si\{ON{=}C(CH_3)CH(C_2H_5)(CH_2)_3CH_3\}_3$ ,

$(CH_3)_2C{=}NOSi\{ON{=}C(CH_3)C_2H_5\}_3$

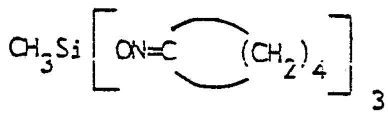

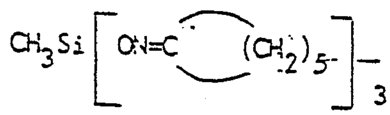

$Z = -N(R^4)COR^4$ , 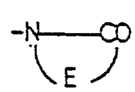

$CH_3Si\{N(CH_3)COCH_3\}_3$

$CH_3Si\{N(C_6H_5)COCH_3\}_3$ , $CF_3CH_2CH_2Si\{N(C_6H_5)COCH_3\}_3$

$CH_2{=}CH-Si\{N(CH_3)COC_6H_5\}_3$

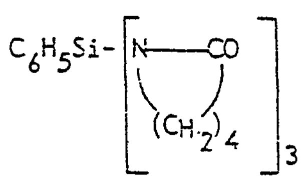 , 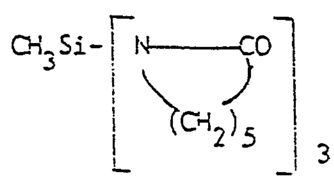

$Z = -NHR^4$

$CH_3Si-(NH\ n-C_4H_9)_3$ , $CH_3Si\left[NHCH_2-\underset{C_2H_5}{\underset{|}{C}}H(CH_2)_3CH_3\right]_3$

$C_6H_5Si(NH\ iso-C_4H_9)_3$

$CH_3Si$ 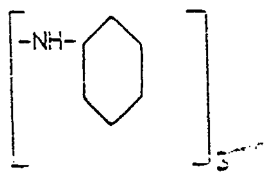

$CH_2=CHSi(NH\ iso-C_4H_9)_3$

---

2) <u>Silanes mixtes</u> :

$CH_3Si(OCH_3)(OCOCH_3)_2$ , $CH_3Si(OCH_3)\left[OCO\underset{C_2H_5}{\underset{|}{C}}H(CH_2)_3CH_3\right]_2$

$CH_2=CHSi(OCH_2CH_2OCH_3)(OCOCH_3)_2$

$(CH_3)_3C-O-Si(OCOCH_3)_3$

$CH_3Si(OC_2H_5)\{ON=C(CH_3)_2\}_2$

$CH_3Si(OCH_2CH_2OCH_3)\{ON=C(CH_3)_2\}_2$

.../...

$CH_3Si(OCH_2CH_2OCH_3)_2\ [ON = C(CH_3)C_2H_5]$

$CH_3Si(OCH)_3[N(CH_3)COC_2H_5]_2$

$CH_3Si(OC_2H_5)[N(CH_3)COC_6H_5]_2$

$CH_3Si(OC_2H_5)_2[N(CH_3)COC_6H_5]$

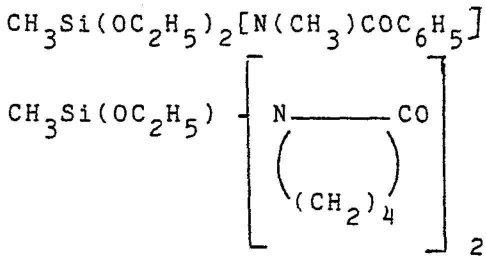

$CH_3Si(OCOCH_3)[NHCH(CH_3)_2]_2$

$(CH_3)_3C\text{-}OSi(OCOCH_3)[NHCH(CH_3)_2]_2$

$(C_2H_5O)_2Si(OCOCH_3)[NHCH(CH_3)_2]$

Les charges minérales (C) sont utilisées à raison de 5 à 200 parties, de préférence 10 à 150 parties, pour 100 parties des polymères α-ω di(hydroxy)diorganopolysiloxaniques (A).

Ces charges peuvent se présentert sous la forme de produits très finement divisés dont le diamètre particulaire moyen est inférieur à 0,1 μ.Parmi ces charges figurent les silices de combustion et les silices de précipitation ; leur surface spécifique est généralement supérieure à 40 m2/g.

Ces charges peuvent également se présenter sous la forme de produits plus grossièrement divisés, de diamètre particulaire moyen supérieur à 0,1 μ. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les

microbilles de verre ; leur surface spécifique est généralement inférieure à 30 m2/g.

Des charges (C) peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevets français 1.126.884, 1.136.885, 1.236.505 ; brevet anglais 1.024.234). Les charges traitées renferment, dans la plupart des cas, de 3 à 30 % de leur poids de composés organosiliciques.

Les charges (C) peuvent être constituées d'un mélange de plusieurs types de charges de granulométrie différente ; ainsi par exemple, elles peuvent être constituées de 30 à 70 % de silices finement divisées de surface spécifique supérieure à 40 m2/g et de 70 à 30 % de silices plus grossièrement divisées de surface spécifique inférieure à 30 m2/g.

Le catalyseur de durcissement (D) est utilisé à raison de 0,0003 à 15 parties, de préférence de 0,0005 à 12 parties, pour 100 parties des polymères α-ωdi(hydroxy)diorganopolysiloxaniques (A). Il est choisi dans le groupe constitué :

(i) des chelates de fer, de titane tels que ceux de formules (les liaisons chelates ne sont pas représentées) :

$Fe[OC(CH_3)=CH-COCH_3]_3$

$(n-C_4H_9O)_2Ti[OC(CH_3)=CH-COCH_3]_2$

$(CH_3)_2CHO_3TiOC(CH_3)=CH-COOC_2H_5$

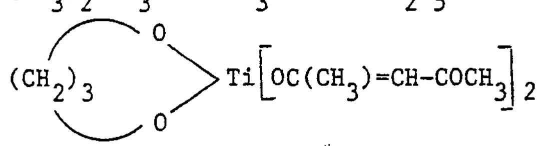

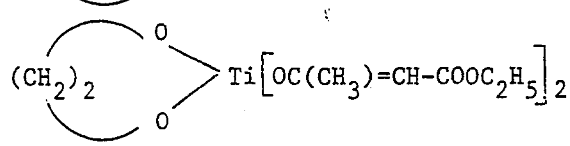

D'autres composés figurent dans les brevets français 1.330.625, 2.121.289, 2.121.631.

(2i) des sels d'étain, de fer, de plomb, d'acides carboxyliques tels que l'éthyl-2 hexanoate, le stéarate, l'oléate, le naphténate

d'étain, de fer, de plomb.

(3i) des sels d'organoétains d'acides carboxyliques tels que le diacétate et le dilaurate de di(n-butyl)étain, le diacétate et le dilaurate de di(n-octyl)étain, le di(éthyl-2 hexanoate) de diméthylétain, le diversatate de di(n-butyl)étain, le succinate de di(n-octyl)étain, le maléate de di(n-octyl)étain.

(4i) des titanates et zirconates d'alcoyles tels que ceux de formules :

$(n\text{-}C_4H_9O)_4Ti$ , $(C_2H_5O)_4TI$ , $[(CH_3)_2CHO]_4Ti$

$(n\text{-}C_3H_7O)_4Ti$ , $(n\text{-}C_8H_{17}O)_4Ti$ , $(CH_3OCH_2CH_2O)_4Ti$

$[CH_3(CH_2)_3CH(C_2H_5)CH_2O]_4Ti$

$(C_2H_5O)_4Zr$ , $[(CH_3)_2CHO]_4Zr$ , $(n\text{-}C_3H_7O)_4Zr$

$(n\text{-}C_4H_9O)_4Zr$ , $[(CH_3)_3C\text{-}O]_4Zr$ , $(CH_3OCH_2CH_2O)_4Zr$

$(n\text{-}C_7H_{35}O)_4Zr$

(5i) des produits de réaction des sels d'organoéthains d'acides carboxyliques (3i) avec les titanates d'alcoyles (4i). Ces produits présentent des liaisons Ti-O-Sn ; leur préparation figure dans le brevet français 1.392.648 et le brevet anglais 928.946.

L'agent fongicide (E) est introduit en quantité telle qu'il représente de 0,01 à 1,2 %, de préférence de 0,03 à 1 % en poids par rapport au poids total de la composition.

Les composés (E) utilisables dans le cadre de la présente invention sont des composés connus dont la préparation est décrite notamment dans les brevets américains 1.796.977 et 1.732.111 et par Cummings, Simmons Ind. Eng. Chem. 20,1173 (1928).

Comme composés (E) particulièrement appropriés on peut citer le disulfure de tétraméthylthiurame, le disulfure de tétraéthylthiurame, le disulfure de tétra-n-butylthiurame. L'agent fongicide (E) préféré selon l'invention est le disulfure de tétraméthylthiurame de formule :

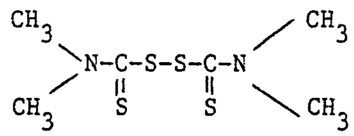

C'est une poudre blanche dont la toxicité aiguë sur souris est faible : DL 50 vers 200 à 2000 mg/kg.

En dehors des constituants (A), (B), (C), (D) et (E), nécessaires à la préparation des compositions monocomposantes, peut être ajouté un aminoorganosilane (F) à raison de 0,3 à 15 parties, de préférence 0,5 à 12 parties, pour 100 parties des α-ω di(hydroxy)-diorganopolysiloxanes (A). Cet aminosilane renferme au moins un radical NH porté par un radical organique, lequel radical est lié à l'atome de silicium par une liaison C-Si.

Plus particulièrement cet aminoorganosilane (F) répond à la formule générale :

$$YNH(G'X)_nGSi\left[(OCH_2CH_2)_pOR^6\right]_{3-m}Y'_m$$

dans laquelle :

- le symbole $R^6$ représente un radical méthyle, éthyle
- le symbole G représente un radical alcoylène ayant de 1 à 5 atomes de carbone
- le symbole X représente un atome d'oxygène, de soufre
- le symbole G' représente un radical alcoylène ayant de 2 à 5 atomes de carbone
- le symbole Y représente un radical de formule $-(G''NH)_kR^7$ dans laquelle le symbole G" représente un radical alcoylène ayant de 2 à 6 atomes de carbone ; le symbole $R^7$ représente un atome d'hydrogène, un radical alcoyle ayant de 1 à 4 atomes de carbone, le symbole k représente zéro, 1,2 ou 3
- le symbole Y' représente un radical méthyle, vinyle, phényle
- les symboles p et n représentent zéro ou 1 ; quand p représente 1, le symbole $R^6$ représente seulement un radical méthyle
- le symbole m représente zéro, 1 ou 2.

Les radicaux alcoylènes représentés par G, G' et G" peuvent être linéaires ou ramifiés ; ils répondent par exemple (sous réserve de tenir compte pour chaque symbole G, G' et G" du nombre des atomes de carbone précédemment défini) aux formules ci-après :

$-CH_2-$ , $-CH_2-CH_2-$ , $-(CH_2)_3-$

$-CH_2-CH(CH_3)-$ , $-(CH_2)_4-$ , $-CH_2CH(CH_3)CH_2-$

$-(CH_2)_5-$ , $-(CH_2)_6-$ , $-CH_2-\underset{CH_3}{\underset{|}{CH}}-CH_2-CH_2-$

$-CH_2-CH_2CH(CH_3)CH_2CH_2-$

Par ailleurs, le radical alcoyle représenté par le symbole $R^7$ peut être un radical méthyle, éthyle, n-propyle, isopropyle, n-butyle, isobutyle.

Les aminoorganosilanes (F) peuvent se répartir en 2 groupes D1 et D2 selon que le symbole n représente respectivement zéro ou un ; ainsi, le groupe D1 répond à la formule :

$$YNH-GSi\left[(OCH_2-CH_2)_pOR^6\right]_{3-m}Y'_m$$

et le groupe D2 à la formule :

$$YNHG'XGSi\left[(OCH_2CH_2)_pOR^6\right]_{3-m}Y'_m$$

A titre d'exemples concrets d'aminorganosilanes du groupe D1 peuvent être cités ceux de formules :

$H_2N(CH_2)_3Si(OCH_2CH_2OCH_3)_3$ , $H_2N(CH_2)_3Si(OC_2H_5)_3$

$H_2N(CH_2)_3Si(OCH_3)_3$ , $HN(C_2H_5)CH_2Si(OCH_3)_3$

$H_2N(CH_2)_2NH(CH_2)_3Si(OCH_3)_3$ ,

$H_2N(CH_2)_2NH(CH_2)_3Si(OCH_2CH_2OCH_3)_3$

$H(NHCH_2CH_2)_2NH(CH_2)_3SiCH_3(OCH_3)_2$

A titre d'exemples concrets d'aminorganosilanes du groupe D2 peuvent être cités ceux de formules :

$H_2N(CH_2)_3O(CH_2)_3Si(OCH_2CH_2OCH_3)_3$

$HN(CH_3)(CH_2)_3O(CH_2)_3Si(OCH_3)_3$

$H_2N(CH_2)_2S(CH_2)_3Si(OCH_3)_3$

$H(NHCH_2CH_2)_2S(CH_2)_3SiCH_3(OCH_3)_2$

Ces différents aminoorganosilanes sont connus, ils sont décrits en particulier dans les brevets américains 2.754.311, 2.832.754, 2.930.809, 2.971.864, 3.341.563, 3.488.373, 3.551.375 et 3.598.853.

Leur présence parmi les divers constituants (A), (B), (C), (D), et (E) dont le mélange conduit aux compositions conformes à l'invention, a pour effet de stabiliser ces compositions et/ou d'améliorer leur adhérence aux matériaux avec lesquels elles seront en contact.

Une partie, ou la totalité des aminoorganosilanes (F), peut être remplacée par des produits polymères résultant de l'hydrolyse partielle de ces silanes. Il est recommandé que ces produits d'hydrolyse soient encore solubles dans les solvants organiques usuels à une concentration d'au moins 5 parties dans 100 parties de solvants. Ces derniers peuvent comprendre les hydrocarbures aliphatiques, cycloaliphatiques, aromatiques, halogénés ou non, tels que le n-octane, le cyclohexane, le méthylcyclohexane, le toluène, le xylène, le cumène, la décaline, le perchloréthylène, le chlorobenzène, l'orthodichlorobenzène.

Egalement, une partie ou la totalité des aminoorganosilanes (F) peut être remplacée par des aminoorganopolysiloxanes renfermant au moins un groupement NH porté par un radical organique, lequel radical organique est lié à un atome de silicium par une liaison C-Si, en particulier ces aminoorganopolysiloxanes peuvent résulter

de la condensation préalable d'un aminoorganosilane (F) sur un di(hydroxy)diorganopolysiloxane.

Des polymères de ce type sont décrits dans le brevet belge 774.830, le brevet américain 3.686.357, la demande européenne 50.453, les brevets français 1.381.590, 1.385.693 et 2.228.814.

Un procédé de préparation plus spécialement recommandé est celui décrit dans le brevet français précité 2.228.814 ; il consiste à faire réagir des aminoorganosilanes trialcoxylés avec des méthylpolysiloxanes hydroxylés titrant au moins 2 % de groupes hydroxyles liés aux atomes de silicium. Ces méthylpolysiloxanes ont une viscosité allant de 1 mPa.s à 25°C à 1000 mPa.s à 25°C et répondent à la formule générale suivante :

$$(CH_3)_{a'}(HO)_{b'}SiO_{\frac{4-a'-b'}{2}}$$

dans laquelle le symbole a' représente un nombre quelconque de 1,6 à 2,3 et le symbole b' représente un nombre quelconque de 0,1 à 1.

Outre les constituants (A), (B), (C), (D), (E) et éventuellement (F), mis en oeuvre pour la préparation des compositions conformes à l'invention, des adjuvants et additifs usuels peuvent être introduits tels que des stabilisants thermiques. Ces composés améliorent la résistance à la chaleur des élastomères silicones, issus du durcissement des compositions monocomposantes ; ils peuvent être choisis parmi les sels d'acides carboxyliques, oxydes et hydroxydes de terres rares, et plus spécialement les oxydes et hydroxydes cériques ainsi que parmi le bioxyde de titane de combustion et les divers oxydes de fer. On emploie avantageusement de 0,1 à 15 parties, de préférence de 0,15 à 12 parties de stabilisants thermiques pour 100 parties des α-ω-di(hydroxy)diorganopolysiloxanes (A).

En plus de ces adjuvants peuvent être introduits des composés organosiliciques qui ont la faculté d'agir sur les caractéristiques physiques des compositions monocomposantes et/ou sur les propriétés mécaniques des élastomères silicones en découlant par durcissement. Ces composés sont bien connus, ils comprennent par exemple

- des polymères α-ω-bis(triorganosiloxy-diorganopolysiloxaniques de viscosité d'au moins 10 mPa.s à 25°C dont les radicaux

organiques liés aux atomes de silicium sont choisis parmi les radicaux méthyles, vinyles, phényles ; de préférence sont utilisés des huiles α-ω-bis(triméthylsiloxy)diméthylpolysiloxaniques de viscosité 10 mPa.s à 25°C à 1000 mPa.s à 25°C.

- des polymères méthylpolysiloxaniques ramifiés, liquides, renfermant de 0,1 à 8 % de groupes hydroxyles liés aux atomes de silicium, formés de motifs $(CH_3)_3SiO_{0,5}$, $(CH_3)_2SiO$, $CH_3SiO_{1,5}$ répartis de manière à conduire à un rapport $(CH_3)_3SiO_{0,5}/(CH_3)_2SiO$ de 0,01 à 0,15 et à un rapport $CH_3SiO_{1,5}/(CH_3)_2SiO$ de 0,1 à 1,5.

- des huiles α-ω-di(hydroxy)diméthylpolysiloxaniques de viscosité 10 à 300 mPa.s à 25°C et des huiles α-ω-di(hydroxy)méthylphénylpolysiloxaniques de visociste 200 à 600 mPa.s à 25°C.

- du diphénylsilanediol, du tétraméthyl-1,1,3,3 disiloxane-diol.

Les polymères α-ωbis(triorganosiloxy)diorganopolysiloxaniques précédents peuvent être remplacés totalement ou partiellement par des composés organiques inertes vis à vis des constituants (A), (B), (C), (D), (E), et (F) et miscibles au moins avec les polymères ω-di(hydroxy)diorganopolysiloxaniques (A). Comme exemples concrets de ces composés organiques peuvent être mentionnés les polyalcoylbenzènes obtenus par alcoylation du benzène à l'aide d'oléfines à longue chaîne en particulier les oléfines à 12 atomes de carbone issues de la polymérisation du propylène. Des composés organiques de ce type figurent par exemple dans les brevets français 2.392.476 et 2.446.849.

Pour fabriquer les compositions conformes à l'invention, il est recommandé d'utiliser un appareillage qui permette de brasser intimement à l'abri de l'humidité, avec et sans apport de chaleur, les constituants (A), (B), (C), (D), (E) auxquels sont éventuellement ajoutés les organosilanes F et les adjuvants et additifs précités.

Tous ces ingrédients peuvent être chargés dans l'appareillage selon un ordre quelconque d'introduction. Ainsi il est possible de mélanger tout d'abord les huiles α-ω-di(hydroxy)diorganopolysiloxaniques (A) et les charges (C) et d'ajouter ensuite à l'empâtage

obtenu les organosilanes (B), les catalyseurs (D) et l'agent fongicide (E).

Il est également possible de mélanger les huiles (a) et les organosilanes (B) et d'ajouter ultérieurement, aux produits de réaction homogènes de ces 2 constituants (A) et (B), les charges (C), les catalyseurs (D) et l'agent fongicide (E). Au cours de ces opérations, les mélanges peuvent être chauffés à une température comprise dans l'intervalle 50 - 180°C sous la pression atmosphérique ou sous une pression réduite afin de favoriser le départ de matières volatiles telles que de l'eau, des polymères de bas poids moléculaire, des acides organiques ou des oximes.

Il est toutefois recommandé, lorqu'on dépasse une température de 100°C, d'incorporer l'agent fongicide (E) en dernier, dans les mélanges refroidis dont la température est nettement inférieure à 100°C. Ce processus évite une éventuelle décomposition du fongicide due à des impuretés présentes dans les divers constituants et même dans le fongicide. Par ailleurs, il est avantageux, pour faciliter sa dispersion au sein des compositions monocomposantes, d'introduire le fongicide (E) sous la forme d'un empâtage résultant de son mélange intime avec une huile diorganopolysiloxanique bloquée triorganosiloxy et/ou hydroxyle.

Les compositions ainsi préparées peuvent être utilisées telles quelles ou sous la forme de dispersions dans des diluants organiques. Ces diluants sont, de préférence, des produits usuels commercialisés, choisis parmi :

- les hydrocarbures aliphatiques, cycloaliphatiques, aromatiques, halogénés ou non, tels que le n-heptane, le n-octane, le cyclohexane, le méthyl-cyclohexane, le toluène, le xylène, le mesitylène, le cumène, la tétraline, la décaline, le perchloroéthylène, le trichloroéthane, le tétrachloroéthane, le chlorobenzène, l'orthodichlorobenzène.
- les cétones aliphatiques et cycloaliphatiques tels que la méthyléthylcétone, la méthylisobutylcétone, la cyclohexanone, l'isophorone.
- les esters tels que l'acétate d'éthyle, l'acétate de butyle, l'acétate d'éthylglycol.

Les quantités de diluants introduites doivent être suffisantes pour obtenir des dispersions stables s'étalant facilement sur les substrats. Ces quantités dépendent essentiellement de la nature et de la viscosité des compositions organopolysiloxaniques de départ. Elles peuvent donc varier dans de larges proportions ; néanmoins il est recommandé de fabriquer des dispersions contenant de 15 à 85 % en poids de diluants.

Les compositions conformes à l'invention, utilisées telles quelles c'est à dire non diluées, ou sous forme de dispersions dans des diluants, sont stables au stockage en l'absence d'eau et durcissent dès la température ambiante (après départ des solvants dans le cas des dispersions) en présence d'eau pour former des élastomères.

Après le dépôt des compositions utilisées telles quelles, sur des substrats solides, en atmosphère humide, on constate qu'un processus de durcissement en élastomères se met en oeuvre, il s'effectue de l'extérieur à l'intérieur de la masse déposée. Une peau se forme d'abord en surface puis la réticulation se poursuit en profondeur. La formation complète de la peau, qui se traduit par un toucher non collant de la surface, demande une période de temps pouvant être comprise dans l'intervalle allant de 1 minute à 55 minutes ; cette période dépend du taux d'humidité relative de l'atmoshère entourant les compositions et de la facuté de réticulation de celles-ci.

Par ailleurs le durcissement en profondeur des couches déposées, qui doit être suffisant pour permettre le démoulage et la manipulation des élastomères formés, nécessite une période de temps plus longue. En effet, cette période dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Cette période de temps plus longue peut se situer entre 10 minutes et 20 heures.

Les compositions peuvent adhérer, une fois durcies en élastomères, [(en particulier celles renfermant les aminoorganosilanes (F)], à divers substrats sans le dépôt préalable d'un agent d'ancrage.

Les compositions peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Les dispersions précitées de ces compositions dans les diluants sont utilisables pour l'imprégnation en couches minces de produits et articles tissés ou non-tissés, l'enduction de feuilles en métal ou en matières plastiques ou cellulosique. Le dépôt peut avoir lieu par exemple au trempé ou par pulvérisation ; dans ce dernier cas, on se sert d'un pistolet à peintures qui permet l'obtention de revêtements mhomogènes d'épaisseur 5 à 300 µ. Après la projection des dispersions, les diluants s'évaporent et les compositions libérées durcissent en un film caoutchouteux.

Ces compositions, diluées ou non, servent plus spécialement pour tous les domaines d'applications qui sont soumis à des conditions favorisant le développement des microorganismes et des moisissures. Il en est ainsi par exemple :

- du jointoiement des appareils sanitaires, de l'enrobage de circuits électroniques utilisés en atmosphère chaude et humide ; de l'enduction de tissus, cuirs, utilisés également en atmosphère chaude et humide.

Les exemples suivants illustrent l'invention :

EXEMPLE 1

On mélange dans un premier malaxeur :

- 100 parties d'une huile α-ω-di(hydroxy-diméthylpolysiloxanique de viscosité 20 000 mPa.s à 25°C

- 56,5 parties d'oxyde de titane du type rutile, de diamètre particulaire moyen 5 microns

- 6,55 parties ou 19,5 parties d'un agent fongicide qui est soit le disulfure de tétraméthylthiurame de formule :

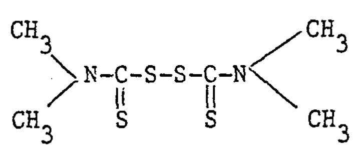

soit l'oxyde de tri(n-butyl)étain de formule $(n-C_4H_9)_3Sn-O-Sn-(n-C_4H_9)_3$.

La durée du malaxage est de l'ordre de 3 heures. On obtient un empâtage (E), blanc, homogène, contenant soit 4 % soit 11 % d'agent antifongique.

Un empâtage témoin (E1) est fabriqué selon le même mode opératoire en remplaçant les 6,55 parties de l'agent antifongique par 6,55 parties de l'oxyde de titane du type rutile.

On mélange dans un deuxième malaxeur :

- 100 parties d'une huile α-ω-di(hydroxy)diméthylpolysiloxanique de viscosité 80 000 mPa.s à 25°C.

- 16 parties d'une huile méthylpolysiloxanique de viscosité 60 mPa.s à 25°C, ayant 0,5 % de groupes hydroxyles liés aux atomes de Si, constituée de motifs $(CH_3)_3SiO_{0,5}$, $(CH_3)_2SiO$ et $CH_3SiO_{1,5}$, répartis de manière à conduire à un rapport $(CH_3)_3SiO_{0,5}/(CH_3)_2SiO$ de 0,04 et à un rapport $CH_3SiO_{1,5}/(CH_3)_2SiO$ de 0,4.

- 14 parties d'une silice de combustion de surface spécifique 200 m2/g, traitée par de l'octaméthylcyclotétrasiloxane.

Le contenu du malaxeur est brassé à 150°C pendant 2 heures sous un léger courant d'azote sec. Après refroidissement vers 40°C de ce contenu, on y ajoute 6,5 parties de l'empâtage (E) précédent, 6 parties de méthyltriacétoxysilane et 0,004 partie de titanate de n-butyle. L'ensemble est malaxé pendant 1 heure. On obtient une composition homogène autovulcanisable renfermant soit 0,18 % soit 0,5 % en poids par rapport au poids total de la composition de l'un des deux agents antifongiques.

On étale la composition à l'aide d'un racle sur des feuilles en polyéthylène disposées à l'air ambiant. La couche pâteuse déposée, d'épaisseur 2 mm, durcit et se transforme en une plaque caoutchouteuse. Cette plaque est décollée de la surface des feuilles en polyéthylène 24 heures après étalement de la couche pâteuse ; elle est ensuite abandonnée 7 jours à l'air ambiant. On découpe alors dans cette plaque, à l'aide d'un emporte-pièce, des éprouvettes circulaires de 20 mm de diamètre.

Ces éprouvettes dites "normales" sont exposées à des moisissures en suivant les essais de détermination de la résistance à

l'envahissement, conformes à la norme AFNOR X 41 514. Ainsi les éprouvettes sont mises en contact pendant 1 mois à une température d'incubation de 30° ± 2°C, et à une humidité relative de 95 % ± 5 % avec les moisissures-tests utilisées, celles-ci comprennent :

- ASPERGILLUS NIGER
- ASPERGILLUS AMSTELODAMI
- ASPERGILLUS FLAVUS
- PENICILLIUM BREVI-COMPACTUM
- PENICILLIUM CYCLOPIUM
- PAECILOMYCES VARIOTI
- TRICHODERMA VIRIDE
- CHAETOMIUM GLOBOSUM
- MYROTHECIUM VERRUCARIA
- STACHYBOTRYS ATRA
- MEMNONIELLA ECHINATA
- PENICILLIUM FUNICULOSUM

Des éprouvettes ayant subi préalablement divers traitements (lessivage, exposition aux rayonnements ultraviolets) sont également mises en contact avec les moisissures précitées.

Le traitement de lessivage consiste à placer les éprouvettes, pendant 48 heures, dans de l'eau distillée portée à 45°C ± 2°C, à raison de 1 g de l'éprouvette pour 100 g d'eau ; les éprouvettes sont ensuite laissées en contact avec les moisissures pendant 4 mois à 30°C ± 2°C.

Le traitement d'exposition aux rayonnements ultraviolets consiste à soumettre les éprouvettes à des radiations de longueurs d'ondes comprises dans l'intervalle 250 - 260 nm pendant 24 heures. Les éprouvettes sont laissées en contact avec les moisissures pendant 4 mois à 30°C ± 2°C.

Les éprouvettes sont en outre exposées aux microorganismes des sols en suivant les essais par enfouissement dans le sol conformes à la norme NF X 41 514 précitée. Selon la technique développée dans cette norme, les éprouvettes dites "normales" sont enfouies dans un sol fortement humifère, de pH 6 à 7,5, de taux d'humidité 30 % ± 2 % porté à 30°C ± 2°C ; elles sont abandonnées dans cet état pendant 3 mois.

L'activité des agents antifongiques, introduits dans les compositions organopolysiloxaniques, est estimée en notant le degré d'envahissement des éprouvettes par les microorganismes. On utilise le code suivant :

0 = développement nul, éprouvette intacte

1 = développement sur 25 % de la surface de l'éprouvette

2 = développement sur 50 % de la surface de l'éprouvette

3 = développement sur 75 % de la surface de l'éprouvette

4 = développement sur 100 % de la surface de l'éprouvette

Les résultats de ces différents essais sont rassemblés dans le tableau I ci-après :

TABLEAU I

| AGENT ANTIFONGIQUE | | SENSIBILITE AUX MOISISSURES | | | SENSIBILITE AUX MICROORGANISMES DES SOLS |
|---|---|---|---|---|---|
| NATURE DE LA COMPOSITION | CONCENTRATION EN % | Eprouvette normale non traitée | Eprouvette lessivée à l'eau | Eprouvette exposée aux rayons ultraviolets | |
| - pas d'antifongique mastic témoin | 0 | 4 | 4 | 4 | 4 |
| - disulfure de tétraméthylthiurame | 0,18<br>0,5 | 0<br>0 | 0<br>0 | 0<br>0 | 0<br>0 |
| - oxyde de tri(n-butyl) étain | 0,18<br>0,5 | 0,5<br>0 | 1<br>0,5 | 1<br>0,5 | 0,5<br>0 |

Des résultats rassemblés dans le tableau I, on constate que le disulfure de tétraméthylthiurame est nettement plus actif que l'oxyde de tri(n-butyl)étain.

EXEMPLE 2

On introduit dans un malaxeur :

- 100 parties d'une huile α-ω-di(hydroxy)diméthylpolysiloxanique de viscosité 150 000 mPa.s à 25°C

- 40 parties d'une huile α-ω-bis(triméthylsiloxy)diméthylpolysiloxanique de viscosité 20 mPa.s à 25°C

- 4 parties de diphénylsilanediol

- 15 parties d'une silice de combustion de surface spécifique 200 m2/g

- 45 parties de carbonate de calcium de diamètre particulaire moyen 5 microns

Le contenu du malaxeur est brassé pendant 2 heures vers 100°C sous un courant d'azote sec. Après refroidissement vers 40°C, on lui ajoute successivement 11,3 parties de l'empâtage (E) utilisé à l'exemple 1 renfermant soit 4 % soit 11 % de disulfure de tétraméthylthiurame et :

. 8 parties du silane de formule $Si(OCH_2CH_2OCH_3)_4$

. 3 parties du silane de formule $H_2NCH_2CH_2NH(CH_2)_3Si(OCH_3)_3$

. 0,07 partie du dilaurate de dibutylétain.

Le mélange est malaxé pendant quelques minutes. On obtient une composition (C1) homogène, ne fluant pas en position verticale, stable au stockage en l'absence d'humidité.

On introduit dans un deuxième malaxeur :

- 100 parties d'une huile α-ω-di(hydroxy)diméthylpolysiloxanique de viscosité 18 000 mPa.s à 25°C

- 18 parties d'une gomme α-ω-bis(triméthylsiloxy)diméthylpolysiloxanique de viscosité 40 000 mPa.s à 25°C

- 6 parties d'une huile α-ω-di(hydroxy)méthylphénylpolysiloxanique de viscosité 350 mPa.s à 25°C

- 12 parties de silice de combustion de surface spécifique 200 m2/g

- 12 parties de lithopone de diamètre particulaire moyen 1 micron.

Le contenu du malaxeur est brassé pendant 4 heures à 150°C sous un courant d'azote sec.

Après refroidissement du mélange vers 50°C, on y introduit successivement :

- 8,[illegible] parties de l'empâtage (E) utilisé à l'exemple 1, renfermant soit 4 %, soit 11 % de disulfure de tétraméthylthiurame ;

- 8,5 parties du réticulant de formule $CH_2=CHSi[ON=C(C_2H_5)CH_3]_3$

et - 0,01 partie du titanate de n-butyle.

Le mélange est malaxé pendant 2 heures. On obtient une composition ($C_2$) homogène, stable au stockage dans des récipients étanches à l'humidité.

On introduit dans un troisième malaxeur :

- 100 parties d'une huile α-ω-di(hydroxy)diorganopolysiloxanique de viscosité 50 000 mPa.s à 25°C renfermant 95 % de motifs $(CH_3)_2SiO$ et 5 % de motifs $CH_3(CH_2=CH)SiO$

- 20 parties d'un mélange liquide de viscosité 90 mPa.s à 25°C, constitué de composés organiques de points d'ébullition 302-385°C à la pression atmosphérique, provenant d'une coupe de distillation du dodécylbenzène ramifié.

- 1 partie d'une huile α-ω-di(hydroxy)méthylphénylpolysiloxanique de viscosité 350 mPa.s à 25°C

- 15 parties de silice de combustion de surface spécifique 200 m2/g traitée par de l'octaméthylcyclotétrasiloxane

- 130 parties de carbonate de calcium de diamètre particulaire moyen 5 microns.

Le contenu du malaxeur est brassé pendant 3 heures à une température de 120°C sous un léger courant d'azote sec.

Après refroidissement du mélange vers 40°C, on y introduit successivement :

- 15 parties de l'empâtage (E) utilisé à l'exemple 1 renfermant soit 4 % soit 11 % du disulfure de tétraméthylthiurame.

- 18 parties du silane de formule $CH_3Si[OCOCH(C_2H_5)(CH_2)_3CH_3]_3$

- 0,008 partie de titanate de n-butyle

L'ensemble est malaxé pendant 1 heure. On obtient une composition homogène, monocomposante, stable au stockage en l'absence d'humidité.

Chaque composition (C1), (C2), et (C3) renferme soit 0,2 % soit 0,55 % de disulfure de tétraméthylthiurame.

Ces compositions après durcissement en élastomères à l'air ambiant, sont mises en contact avec des moisissures et des microorganismes des sols, en suivant le processus décrit à l'exemple 1.

Les résultats sont rassemblés dans le tableau II ci-après où l'on constate que le développement des moisissures et microorganismes ne se produit pratiquement pas sur l'ensemble des éprouvettes.

TABLEAU II

| NATURE DE LA COMPOSITION | CONCENTRATION DE L'AGENT FONGICIDE EN % | SENSIBILITE AUX MOISISSURES | | | SENSIBILITE AUX MICROORGANISMES |
|---|---|---|---|---|---|
| | | Eprouvette normale non traitée | Eprouvette lessivée à l'eau | Eprouvette exposée aux rayons ultraviolets | |
| COMPOSITION $C_1$ | 0 témoin<br>0,2<br>0,55 | 4<br>0<br>0 | 4<br>0<br>0 | 4<br>0,5<br>0 | 4<br>0,5<br>0 |
| COMPOSITION $C_2$ | 0 témoin<br>0,2<br>0,57 | 4<br>0<br>0 | 4<br>0<br>0 | 4<br>0,5<br>0 | 4<br>0<br>0 |
| COMPOSITION $C_3$ | 0 témoin<br>0,2<br>0,55 | 4<br>0<br>0 | 4<br>0<br>0 | 4<br>0<br>0 | 4<br>0<br>0 |

REVENDICATIONS

1) Composition organopolysiloxanique monocomposante, stable au stockage en l'absence d'eau, durcissant en élastomère dès la température ambiante en présence d'eau, formée par mélange des constituants ci-après :

A) 100 parties d'un polymère α-ω dihydroxydiorganopolysiloxanique, de viscosité 700 à 1 000 000 mPa.s à 25°C, formé d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogène, des groupes cyano ,

B) 2 à 25 parties d'un organosilane répondant à la formule $R_aSi(Z)_{4-a}$ dans laquelle le symbole R a la signification donnée sous (A), les symboles Z, identiques ou différents représentent des radicaux hydrolysables choisis dans le groupe constitué de ceux de formules :

$-OR^1-$, $-OCOR^2-$, $-ON=C(R^3)_2$, 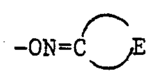,

$-N(R^4)COR^4$, 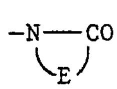, $-NHR^4$ dans lesquelles :

. le symbole $R^1$ représente un radical alcoyle ayant de 1 à 4 atomes de carbone, un radical β-méthoxyéthyle de formule : $-CH_2CH_2OCH_3$

. le symbole $R^2$ représente un radical hydrocarboné, exempt d'insaturations aliphatiques, ayant de 1 à 15 atomes de carbone

. les symboles $R^3$, identiques ou différents, représentent des radicaux alcoyles, ayant de 1 à 5 atomes de carbone

. les symboles $R^4$, identiques ou différents, représentent des radicaux hydrocarbonés exempts d'insaturations aliphatiques, ayant de 1 à 10 atomes de carbone

. le symbole E représente un radical alcoylène ayant de 3 à 7 atomes de carbone

. le symbole a représente zéro ou un

C) 5 à 200 parties de charges minérales

D) 0,0003 à 15 parties d'un catalyseur de durcissement choisi parmi les chelates de fer et de titane, les sels d'étain, de fer, de plomb d'acides carboxyliques, les sels d'organoétains d'acides carboxyliques, les titanates et zirconates d'alcoyles, les produits de réaction des sels d'organoétains d'acides carboxyliques avec les titanates d'alcoyles,

la composition étant caractérisée en ce qu'elle comporte de 0,01 à 1,2 % en poids par rapport au poids total de la composition, d'un agent fongicide (E) choisi parmi au moins un disulfure de tétraalkylthiurame répondant à la formule (I) :

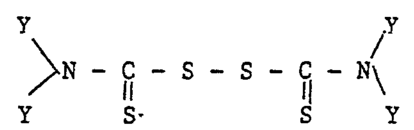

dans laquelle les radicaux Y, identiques ou différents, représentent un radical alkyle présentant de 1 à 4 atomes de carbone.

2) Composition selon la revendication 1, caractérisée en ce que la composition comporte de 0,03 à 1 % en poids d'agent fongicide (E) par rapport au poids total de la composition.

3) Composition selon la revendication 1 ou 2, caractérisée en ce que l'agent fongicide (E) est choisi parmi le disulfure de tétraméthylthiurame, le disulfure de tétraéthylthiurame et le disulfure de tétra-n-butylthiurame.

4) Composition selon l'une quelconque des revendications précédentes caractérisée en ce qu'elle comporte en outre : de 0,3 à 15 parties, pour 100 parties des α-ω-di(hydroxy)diorganopolysiloxanes (A), d'un aminoorganosilane (F) renfermant au moins un radical organique lié à un atome de silicium par une liaison C-Si.

5) Composition selon la revendication 4, caractérisée en ce que ledit aminoorganosilane (F)répond à la formule générale :

$$YNH(G'X)_nGSi\left[(OCH_2CH_2)_pOR^6\right]_{3-m}Y'_m$$

dans laquelle :

- le symbole $R^6$ représente un radical méthyle, éthyle
- le symbole G représente un radical alcoylène ayant de 1 à 5 atomes de carbone
- le symbole X représente un atome d'oxygène, de soufre
- le symbole G' représente un radical alcoylène ayant de 2 à 5 atomes de carbone
- le symbole Y représente un radical de formule $-(G''NH)_kR^7$ dans laquelle le symbole G" représente un radical alcoylène ayant de 2 à 6 atomes de carbone ; le symbole $R^7$ représente un atome d'hydrogène, un radical alcoyle ayant de 1 à 4 atomes de carbone, le symbole k représente zéro, 1,2 ou 3
- le symbole Y' représente un radical méthyle, vinyle, phényle
- les symboles p et n représentent zéro ou 1 ; quand p représente 1, le symbole $R^6$ représente seulement un radical méthyle
- le symbole m représente zéro, 1 ou 2.

0141685

Office européen des brevets

# RAPPORT DE RECHERCHE EUROPEENNE

Numéro de la demande

EP 84 40 1590

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | CHEMICAL ABSTRACTS, volume 74, no. 26, 28 juin 1971, page 49, abrégé 143042d, (COLUMBUS, OHIO, US); N.N. DUBOK et al.: "Fungus resistance of raw rubbers, compounding ingredients, and vulcanizates", & Kauch. Rezina 1971, 30(3), 19-22 * abrégé * | 1 | C 08 L 83/04<br>C 08 K 5/40<br>A 01 N 47/26 |
| Y | GB-A- 896 454 (BAYER) * revendications 1,2 * | 1 | |
| Y | GB-A- 793 594 (MIDLAND SILICONES) * revenidcations 1,2,3; page 2, lignes 66-71, 83-88 * | 1 | |
| A | EP-A-0 006 172 (WACKER) * revendications 1,2; page 7, paragrpahe 7 * | 1 | DOMAINES TECHNIQUES RECHERCHES (Int. Cl.4)<br>C 08 L<br>C 08 K<br>A 01 N |
| A | EP-A-0 034 877 (GENERAL ELECTRIC) * revendication 1 * | 1 | |
| A | DE-A-2 613 698 (HOECHST) * revendication 1; page 5, dernier paragraphe; page 7, paragraphe 3 * | 1 | |
| | --- -/- | | |

Le présent rapport de recherche a été établi pour toutes les revendications

| Lieu de la recherche | Date d'achèvement de la recherche | Examinateur |
|---|---|---|
| LA HAYE | 06-12-1984 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

0141685

Office européen des brevets

# RAPPORT DE RECHERCHE EUROPEENNE

Numéro de la demande

EP 84 40 1590

Page 2

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.4) |
| L | K.F. HEINISCH: "Kautschuk-Lexikon", 2ième édition, 1977, A.W. Gentner Verlag, STUTTGART (DE) * page 456: "SKTV est un caoutchouc de polysiloxane" * | | |
| | ----- | | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 06-12-1984 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82